# FASCICULE DE BREVET EUROPEEN

(11) **EP 0 477 356 B1**
(45) Date de publication et mention de la délivrance du brevet: **26.01.1994**
(21) Numéro de dépôt: 91908911.0
(22) Date de dépôt: 12.04.1991
(51) Int. Cl.: B01J 8/06, C01B 3/38, C01C 1/04

(54) **CONVERTISSEUR CATALYTIQUE, TUBULAIRE ET PRESSURISE D'HYDROCARBURES**
KATALYTISCHER KOHLENWASSERSTOFFDRUCKROHRKONVERTER
TUBULAR PRESSURIZED CATALYTIC HYDROCARBON CONVERTER

(30) Priorité: 13.04.1990 FR 9004828
(43) Date de publication de la demande: 01.04.1992
(73) Titulaire: COMPAGNIE FRANCAISE D'ETUDES ET DE CONSTRUCTION "TECHNIP", 92400 Courbevoie (FR)
(72) Inventeur: SOSNA, Mikail Haimovich, Moscou, 127018 (SU); SEMENOV, Vladimir Petrovich, Moscou, 129090 (SU); HARLAMOV, Valentin Vasilevich, Moscou, 109900 (SU); KROTOV, Leonid Yvanovich, Moscou (SU); ZATS, Boris Semenovich, Penza, 440018 (SU); ZINGER, Isaak Moiseevich, Penza, 440018 (SU); BONDAR, Isaak Efimovich, Moscou, 125167 (SU); JAKUSHEVA, Galina Nikolaevna, Moscou, 129348 (SU); NIKOLOVA, Lidya Zaharovna, Moscou 109443 (SU); EFANKIN, Vladimir Fedoseevich, Penza, 440039 (SU); KISELEV, Gennadii Fedorovich ulitsa Novatorov, 40, Moscou, 117421 (SU); CHUBUKOV, Vladimir Kazimirovich, décédé (SU); GAVRILIN, Vladimir Petrovich, décédé (SU)
(74) Mandataire: Durand, Yves Armand Louis
(86) Numéro de dépôt international: FR9100309
(87) Numéro de publication internationale: WO9116129

(56) Documents cités:
- DE-A- 2 042 996
- DE-A- 2 709 621

## Description

La présente invention concerne un convertisseur catalytique, tubulaire et pressurisé d'hydrocarbures qui peut être utilisé dans l'industrie chimique, la pétrochimie, la métallurgie et dans d'autres branches industrielles liées à la production de l'ammoniac, du méthanol, de l'hydrogène.

On connaît bien le convertisseur catalytique, tubulaire et pressurisé d'hydrocarbures constitué d'une enveloppe cylindrique à l'intérieur de laquelle sont disposés des tubes de réaction verticaux dont les extrémités sont raccordées aux dispositifs d'arrivée et d'évacuation des gaz par des "queues de cochon" de compensation (brevet anglais N° 1093943).

Le défaut de ce convertisseur bien connu réside principalement dans le fait qu'il est nécessaire de compenser à l'aide des "queues de cochon" la dilatation des tubes de réaction sous l'effet de la température, ce qui peut représenter, dans la pratique, un allongement de 200 mm. D'autre part, les "queues de cochon" ne sont pas accessibles, ce qui empêche de procéder à leur remplacement si elles sont hors d'usage.

Il existe un autre type de convertisseur catalytique, tubulaire et pressurisé d'hydrocarbures, beaucoup plus proche, par sa conception technique, du modèle faisant l'objet de l'invention. Il s'agit d'un convertisseur constitué d'une enveloppe cylindrique à l'intérieur de laquelle sont disposées des colonnes montantes d'évacuation de gaz. Autour de ces colonnes montantes sont regroupés et disposés coaxialement dans des gaines les tubes de réaction, dont les extrémités inférieures sont raccordées aux colonnes montantes d'évacuation des gaz au moyen de "queues de cochon" (brevet anglais N° 1376187).

Le dispositif de compensation de cet appareil présente un avantage puisque, dans ce cas, il ne faut compenser que la différence entre les dilatations thermiques des tubes et des colonnes. En revanche, il présente une série d'inconvénients.

Les tubes de réaction ayant tendance à s'incurver lorsqu'ils sont chauffés à haute température, on constate dans cet appareil une déformation transversale des "queues de cochon", ce qui entraîne une réduction de leur durée de vie et de leur fiabilité.

D'autre part, la conception de cet appareil prévoit un raccordement direct des "queues de cochon" à la surface extérieure des colonnes montantes. En conséquence, même en cas de disposition des "queues de cochon" sur un seul niveau, une partie du cordon de soudure située sur la partie tournée vers le faisceau, reste inaccessible, ce qui réduit également la fiabilité du système de compensation. Il est impossible de remplacer les "queues de cochon" hors d'usage sans procéder au démontage complet des tubes. La présente invention a pour but d'augmenter la fiabilité et la durée de vie, en supprimant la déformation transversale des tubes de réaction et en facilitant le montage des "queues de cochon". L'objectif fixé a pu être atteint en équipant le convertisseur d'une cloison transversale fixée aux extrémités inférieures des gaines et pourvues d'orifices permettant d'introduire librement les extrémités inférieures des colonnes montantes, elles-mêmes raccordées aux "queues de cochon".

Le convertisseur présente les avantages suivants.

Premièrement, la cloison transversale pourvue d'orifices dans lesquels sont librement disposés les tubes de réaction, permet d'éviter toute déformation transversale des "queues de cochon" et en conséquence, d'éliminer les efforts supplémentaires, ce qui augmente la fiabilité de l'appareil.

Deuxièmement, la cloison transversale permet d'éviter les flexions importantes des tubes de réaction, et par conséquent permet un démontage aisé des tubes en donnant la possibilité de remplacer séparément certains tubes hors d'usage. La durée de vie du convertisseur, de ce fait, est améliorée.

Troisièmement, la présence de plaques à couvercles amovibles sur les colonnes montantes permet d'assurer l'accès aux extrémités des "queues de cochon", et par conséquent, le remplacement de celles-ci dès qu'elles sont hors d'usage. De ce point de vue à nouveau, la durée de vie du convertisseur est augmentée.

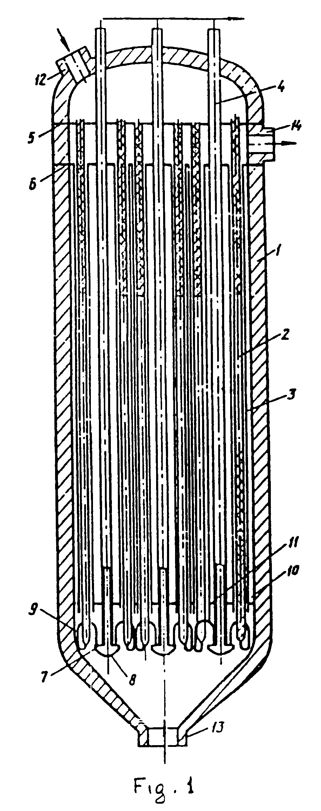

La Figure 1 représente une vue générale en coupe du convertisseur catalytique, tubulaire et pressurisé d'hydrocarbures
La Figure 2 représente une cloison transversale munie d'orifices

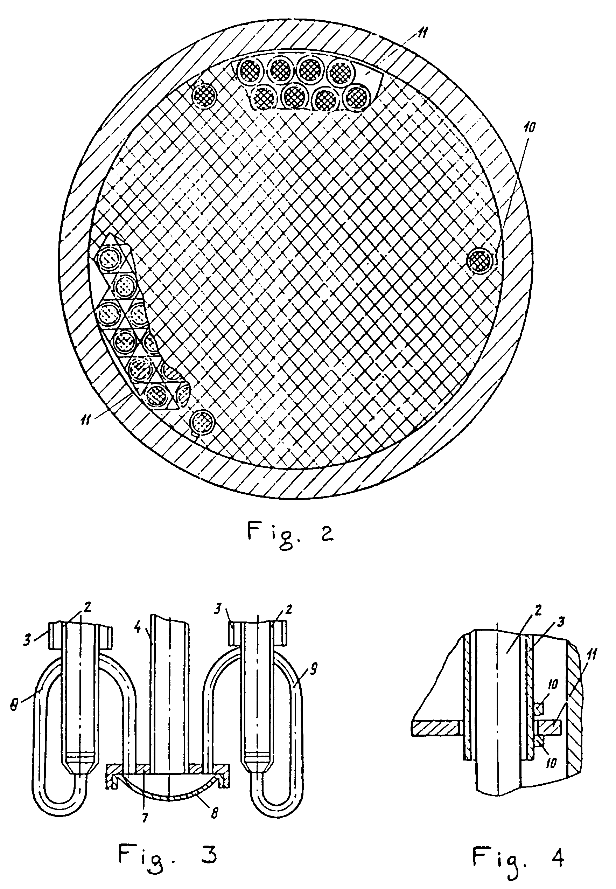

Les Figures 3 et 4 représentent les détails du convertisseur.

Le convertisseur catalytique, tubulaire et pressurisé d'hydrocarbures comprend une enveloppe cylindrique (1) revêtue d'un garnissage, à l'intérieur de laquelle se trouvent des tubes de réaction (2) verticaux remplis de catalyseur, disposés coaxialement dans des gaines (3) et regroupés autour de colonnes montantes d'évacuation des gaz (4). Les tubes de réaction (2) sont fixés sur une plaque support étanche (5) et les gaines sont fixées sur une autre plaque (6) également étanche. Les extrémités inférieures des colonnes montantes d'évacuation des gaz sont équipées de plaques (7) à couvercles amovibles (8). Les plaques (7) sont raccordées aux "queues de cochon" de compensation (9). Sur les extrémités inférieures d'au moins trois gaines sont fixées deux par deux des butées (10) entre lesquelles la cloison transversale (11) est disposée librement. D'autre part, des piquages ont été prévus sur le corps de l'appareil : pour l'alimentation du mélange gaz-vapeur (12), pour l'introduction du fluide caloporteur (13) et pour son évacuation (14).

Le convertisseur fonctionne de la façon suivante.
Le mélange gaz-vapeur sous pression est introduit dans l'enveloppe (1) par le piquage (12), et passe dans les tubes de réaction (2) ; simultanément, on injecte le fluide caloporteur dans la partie calandre par le piquage (13). Le fluide caloporteur passe à travers les jeux existants entre les gaines (3) et les tubes (2) et transmet la chaleur aux réactifs chimiques. La conversion des hydrocarbures se produit dans les tubes de réaction (2) sur le lit du catalyseur, sous l'action de la chaleur transmise par le fluide caloporteur. Le gaz de conversion formé est envoyé par l'intermédiaire des "queues de cochon" (9) dans les colonnes montantes d'évacuation des gaz (4) et évacué du convertisseur. Le convertisseur proposé permet d'augmenter la fiabilité et la durée de vie de l'appareil.

## Revendications

1. Convertisseur comprenant une enveloppe cylindrique et, à l'intérieur de ladite enveloppe,
- des colonnes montantes (4) pour l'évacuation des gaz,
- des tubes de réaction (2) groupés autour des colonnes montantes et disposés coaxialement dans des gaines (3), la partie inférieure des tubes de réaction d'un groupe étant raccordée à l'extrémité inférieure de la colonne montante correspondante par des "queues de cochon" (9),
- des moyens d'alimentation en gaz des tubes de réaction, des moyens pour l'évacuation des gaz des colonnes montantes et des moyens pour faire passer un fluide caloporteur entre les tubes et les gaines.
caractérisé en ce que la liaison entre les "queues de cochon" (9) et les colonnes montantes correspondantes s'effectue sur des plaques (7) disposées aux extrémités inférieures des colonnes montantes d'évacution des gaz (4) et pourvues de couvercles amovibles (8), et en ce qu'il comprend en outre une cloison transversale (11) rattachée librement aux extrémités inférieures d'au moins trois des gaines et comportant des orifices pour le libre passage des tubes de réaction et des colonnes montantes.

2. Convertisseur selon la revendication 1, caractérisé en ce que la fixation de la cloison transversale (11) aux extrémités inférieures des gaines s'effectue librement entre des butées (10) disposées deux par deux sur au moins trois desdites gaines.

3. Utilisation d'un convertisseur selon la revendication 1 ou 2 pour effectuer une réaction catalytique de conversion d'hydrocarbures, un catalyseur étant disposé dans les tubes de réaction verticaux (2).

## Patentansprüche

1. Konverter mit einem zylindrischen Umhüllungsmantel und innerhalb des besagten Umhüllungsmantels,
- Steigrohrleitungen (4) zur Abfuhr der Gase,
- um die Steigrohrleitungen herum in Gruppen zusammengestellten und in Hülrohren (3) koaxial angeordneten Reaktionsrohren (2), wobei der untere Teil der Reaktionsrohre einer Gruppe an das untere Ende der entsprechenden Steigrohrleitungen durch "Schweineschwänze" (9) angeschlossen ist,
- Mitteln zum Speisen der Reaktionsrohre mit Gas, Mitteln zur Abfuhr der Gase der Steigrohrleitungen und Mitteln, um ein Wärmeträgerfluid zwischen den Rohren und den Hülrohren strömmen zu lassen,
dadurch gekennzeichnet, dass die Verbindung zwischen den "Schweineschwänzen" (9) und den entsprechenden Steigrohrleitungen durch an den unteren Enden der Gasabfuhrsteigrohrleitungen (4) angeordnete und mit abnehmbaren Deckeln (8) versehene Platten (7) erfolgt und dass er ausserdem eine an den unteren Enden von wenigstens drei der Umhüllungsrohre frei befestigte und Offnungen für den freien Durchlass der Reaktionsrohre und der Steigrohrleitungen aufweisende Quertrennwand (11) umfasst.

2. Konverter nach Anspruch 1, dadurch gekennzeichnet, dass die Befestigung der Quertrennwand (11) an den unteren Enden der Hülrohre zwischen an wenigstens drei der besagten Hülrohre zwei zu zwei angeordneten Anschläge (10) frei erfolgt.

3. Verwendung eines Konverters gemäss Anspruch 1 oder 2, um eine katalytische Reaktion zur Konvertierung von Kohlenwasserstoffen durchzuführen, wobei ein Katalysator in den senkrechten Reaktionsrohren (2) angeordnet ist.

## Claims

1. Converter comprising a cylindrical envelope and inside of the said envelope,
- riser-pipes (4) for the discharge of the gases,
- reaction tubes (2) grouped about the riser-pipes and disposed coaxially within sheaths (3), the lower portions of the reaction tubes of one group being connected to the lower end of the corresponding riser-pipe by "pigtails" (9),
- means for feeding the reaction tubes with gas, means for discharging the gases from the riser-pipes and means for passing a heat-carrying fluid between the tubes and the sheaths,
characterized in that the connection between the "pigtails" (9) and the corresponding riser-pipes is effected on plates (7) disposed at the bottom ends of the riser-pipes (4) for the discharge of the gases and provided with removable covers (8) and in that it moreover comprises a transverse partition wall (11) freely connected to the lower ends of at least three of the sheaths and comprising apertures for the free passage of the reaction tubes and of the riser-pipes.

2. Converter according to claim 1, characterized in that the fastening of the transverse partition wall (11) to the bottom ends of the sheaths is effected freely between stops (10) disposed two by two on at least three of the said sheaths.

3. Utilization of a converter according to claim 1 or 2 for effecting a catalytic reaction for the conversion of hydrocarbons, a catalyst being disposed within the vertical reaction tubes (2).
